# NEUE EUROPÄISCHE PATENTSCHRIFT

(11) **EP 1 490 302 B2**
(45) Veröffentlichungstag und Bekanntmachung des Hinweises auf die Entscheidung über den Einspruch: **19.12.2012**
(45) Hinweis auf die Patenterteilung: 30.07.2008
(21) Anmeldenummer: 03727178.0
(22) Anmeldetag: 04.04.2003
(51) Int. Cl.: C02F 1/00, B01D 27/10

(54) **WASSERFILTERPATRONE MIT EINER AUSTAUSCHBAREN, EINEN LEITWERTSENSOR ENTHALTENDEN KONTROLLEINHEIT**
WATER FILTER CARTRIDGE COMPRISING AN EXCHANGEABLE TESTING UNIT THAT CONTAINS A CONDUCTANCE SENSOR
CARTOUCHE DE FILTRAGE D'EAU COMPRENANT UN DISPOSITIF DE COMMANDE INTERCHANGEABLE AVEC UN CAPTEUR DE CONDUCTANCE

(30) Priorität: 04.04.2002 DE 10214846
(43) Veröffentlichungstag der Anmeldung: 29.12.2004
(73) Patentinhaber: Aquis Wasser-Luft-Systeme GmbH Lindau, Zweigniederlassung Rebstein, 9445 Rebstein (CH)
(72) Erfinder: SCHROTT, Harald, 88131 Lindau (DE); WAWRLA, Andreas, CH-9443 Widnau (CH); ZUCHOLL, Klaus, 68199 Mannheim (DE)
(74) Vertreter: Roth, Klaus
(86) Internationale Anmeldenummer: PCT/DE2003/001126
(87) Internationale Veröffentlichungsnummer: WO 2003/084875

(56) Entgegenhaltungen:
- GB-A- 2 312 176
- US-A- 4 937 557
- US-A1- 2002 030 020
- US-B1- 6 264 830

## Beschreibung

Die Erfindung betrifft eine Wasserfilterpatrone nach dem Oberbegriff des Anspruchs 1.

Filterpatronen zur Wasseraufbereitung enthalten in der Regel Absorbermaterialien für Geruch und Geschmacksstoffe (Aktivkohle) sowie Ionenaustauscher zur ganz- oder teilweisen Entfernung von Härtebildnern und Schwermetallen aus dem Wasser.

Diese Materialien haben eine begrenzte Lebensdauer, die sich zum einen aus deren Absorptions- bzw. Austauschkapazität - zum andern aus ihrer Beständigkeit gegen mikrobiologische Besiedlung ergibt.

Bei bekannter Wasserzusammensetzung kann die Filterlebensdauer aus der durchgesetzten Wassermenge bestimmt werden. Aus der Beständigkeit gegen mikrobiologische Besiedlung typischer Filtermaterialien ergibt sich erfahrungsgemäß eine Betriebsdauer von einigen Wochen. Filterpatronen werden daher sinnvollerweise bezüglich der durchsetzten Wassermenge, Wasserqualität und der Einsatzdauer überwacht.

Im Handel sind beispielsweise Wasserfilterpatronen für Kaffeemaschinen mit integriertem Wasserzähler sowie Wasserfilterpatronenkannen mit Zeitgeberbausteinen bekannt geworden.

Mit der Druckschrift US 60 24 867 ist weiterhin eine Wasserfilterpatrone zur Verwendung im Haushalt bekannt geworden, die eine austauschbare Kontrolleinheit zur Kontrolle des Zustands der Wasserfilterpatrone aufweist. Als Grundlage hierzu dient die Zeit, in der Wasser durch die Filtereinheit strömt. Aufgrund dieser Zeiterfassung bzw. der sich daraus ergebenden Wassermenge wird auf den Erschöpfungsgrad der Filterpatrone rückgeschlossen.

Nachteilig bei diesem Stand der Technik ist jedoch der Umstand, dass der Erschöpfungsgrad der Filterpatrone nicht nur von der gereinigten Wassermenge, sondern auch von anderen Größen, beispielsweise dem Verschmutzungsgrad des ungereinigten Wassers, der Temperatur, usw. abhängt.

Unabhängig hiervon offenbart die Druckschrift GB 2 312 176 A ein Wasseraufbereitungsgerät mit Leitwertsensoren und separat angeordneten Filterpatronen. Die Druckschrift US 6,264, 830 B1 offenbart einen Sterilisationsapparat mit einem Temperatursensor. Die Druckschrift US 4, 937,557 betrifft einen Schaltkreis für Umkehrosmosefilter.

Aufgabe der vorliegenden Erfindung ist es, eine Wasserfilterpatrone mit Sensoreinheit vorzuschlagen, die flexibel in unterschiedlichsten Geräten eingesetzt werden kann bzw. leicht in entsprechenden Geräten nachrüstbar ist.

Diese Aufgabe wird durch eine Wasserfilterpatrone mit den Merkmalen des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Wasserfilterpatrone dadurch aus, dass die Kontrolleinheit eine Sensoreinheit mit wenigstens einem Leitwertsensor umfasst. Mit einem Leitwertsensor können unterschiedliche Messungen durchgeführt werden, die eine Verbesserung der Bestimmung des Erschöpfungsgrades der Filterpatrone bewirken.

Erfindungsgemäß werden dabei Sensorelemente der Sensoreinheit vorgesehen, die in das Gehäuse der Filterpatrone hineinragen. Auf diese Weise ist eine Messung der Reinwasserqualität unmittelbar nach dem Austritt aus dem Filtermaterial der Filterpatrone möglich. Störfaktoren durch die anschließende Wasserführung sind hierdurch weitgehend ausgeschlossen.

In dieser Ausführungsform der Erfindung wird der Leitwertsensor zur Messung der Reinwasserqualität vorgesehen. Anhand der Reinwasserqualität, d.h. der Qualität des' gereinigten Wassers, lässt sich die noch vorhandene Wirksamkeit der Filterpatrone unmittelbar und damit unabhängig von anderen Einflussgrößen überwachen. Bei einer Verschlechterung der Qualität ist davon auszugehen, dass die Wirksamkeit der Filterpatrone nachlässt bzw. die Filterpatrone erschöpft ist, so dass diese ausgetauscht werden muss.

Ein solcher Leitwertsensor, der beispielsweise über zwei oder mehrere in das Reinwasser hineinragende Elektroden die Leitfähigkeit bzw. den Leitwert des Reinwassers misst, stellt eine vergleichsweise einfache Lösung zur Erfassung der Reinwasserqualität dar. Über entsprechende Schwankungen im Reinwasserleitwert können unmittelbare Rückschlüsse auf die Wirksamkeit der Filterpatrone gezogen werden.

Die Leitwertmessung kann auch im Filterbett, d.h. in dem Bereich der Filterpatrone stattfinden, in dem sich das Filtermaterial befindet. Dieser Leitwert hängt vom Zustand und somit vom Erschöpfungsgrad der Filterpatrone ab.

Um den Austausch der Sensoreinheit bzw. den Wechsel der Wasserfilterpatrone möglichst einfach zu gestalten, werden vorteilhafterweisse Befestigungselemente an der Filterpatrone und/oder der Sensoreinheit vorgesehen. Derartige Befestigungselemente könne beispielsweise in Form von Rastelemente vorgesehen werden, die ein einfaches Aufklipsen oder Einraten der Sensoreinheit an der Filterpatrone ermöglichen. Eine Verrastung stellt beispielhaft die Möglichkeit einer Befestigung der Sensoreinheit an der Filterpatrone dar, die ohne großen Aufwand und insbesondere ohne Werkzeug herstellbar und wieder lösbar ist.

Um die Sensorelemente entsprechend anzuordnen wird in einer Weiterbildung dieser Ausführungsform wenigstens ein Durchlass oder wenigstens eine Sollbruchstelle für den Durchtritt eines oder mehrerer Sensorelemente vorgesehen. Solche Durchlässe oder Sollbruchstellen erleichtern das Anbringen der erfindungsgemäßen Sensoreinheit mit in die Filterpatrone hineinragenden Sensorelementen.

In einer bevorzugten Ausführungsform werden diese Durchbrüche durch entsprechende Dichtelemente abgedichtet, so dass an der Stelle des Durchtritts der Sensorelemente keine Leckstellen vorhanden sind.

In einer besonderen Ausführungsform der Erfindung kann an der vorgesehenen Stelle für den Durchtritt der Sensorelemente die Gehäusewandung der Filterpatrone mit einem dichtenden, elastischen Material, z.B. einem Elastomer versehen sein. Durch dieses dichtende Material können sodann beispielsweise nadelförmige Elektroden unter Beibehaltung eines dichtenden Formschlusses mit dem Material durchgestochen werden.

In einer Weiterbildung der Erfindung wird zudem eine Messung der Rohwasserqualität vorgenommen. Auch diese Messung kann beispielsweise durch Erfassung des Leitwerts des Rohwassers, d.h. des ungereinigten Wassers vor dem Eintritt in die Filterpatrone vorgenommen werden.

Durch die Messung der Rohwasserqualität bzw. des Leitwerts des Rohwassers ist es möglich, weitere Rückschlüsse auf den Erschöpfungszustand der Filterpatrone zu ziehen. Insbesondere in Verbindung mit der Erfassung der gereinigten Wassermenge kann unter Einbeziehung der Unterschiede zwischen der Rohwasserqualität und der Reinwasserqualität die Belastung der Filterpatrone durch die Menge absorbierter oder ausgetauschter Stoffe bestimmt werden.

Für eine solche Bestimmung wird bevorzugt eine entsprechend ausgebildete elektronische Auswerteeinheit vorgesehen.

Für die Erfassung der Rohwasserqualität werden in einer besonderen Ausführungsform zwei außen an der Sensoreinheit angebrachte Elektroden vorgesehen. Dies ist insbesondere bei Filterpatronen von Vorteil, die in einem Wasservorratstank zum Einsatz kommen. In diesem Fall können die außen an der Sensoreinheit angebrachten Elektroden von dem im Wasservorratstank befindlichen Wasser benetzt werden.

In einer Weiterbildung der Erfindung umfasst die Sensoreinheit darüber hinaus einen Temperatursensor. Mit Hilfe der Temperaturerfassung ist es möglich entsprechende Temperatureinflüsse bei der Bestimmung des Zustands der Filterpatrone einzubeziehen.

Darüber hinaus wird die Sensoreinheit bevorzugt mit einem Zeitglied versehen, so dass eine Zeiterfassung möglich ist. So kann neben der Bestimmung des Filterzustands aufgrund der Bestimmung der Wasserqualität auch ein zeitabhängiger Filterwechsel vorgesehen werden. Dies kann insbesondere in Verbindung mit der erfassten Wassertemperatur erfolgen. Auf diese Weise ist sichergestellt, dass auf jeden Fall ein rechtzeitiger Filterwechsel erfolgt, beispielsweise bei mikrobiologischer Besiedlung oder sonstigen Gründen, die nicht oder nur schwer durch die sensorische Erfassung der Wasserqualität detektierbar sind.

Vorteilhafterweise wird die Sensoreinheit mit einer Anzeige versehen, die wenigstens einen erforderlichen Filterwechsel anzeigt. In einer aufwendigeren Ausführungsform kann auch eine Anzeige weiterer Informationen, z.B. des Erschöpfungsgrades oder der restlichen voraussichtlichen Einsatzzeit der Filterpatrone angezeigt werden. Die Anzeige kann hierbei auf unterschiedliche Weise vorgenommen werden.

Neben einer optischen Anzeige ist beispielsweise auch der Einsatz eines akustischen Signalgebers denkbar.

Die erfindungsgemäße Filterpatrone wird bevorzugt in Getränkemaschinen, insbesondere Kaffeeautomaten oder Trinkwassergeräten verwendet, wo sie beispielsweise in einem Wasservorratsbehälter einsetzbar ist.

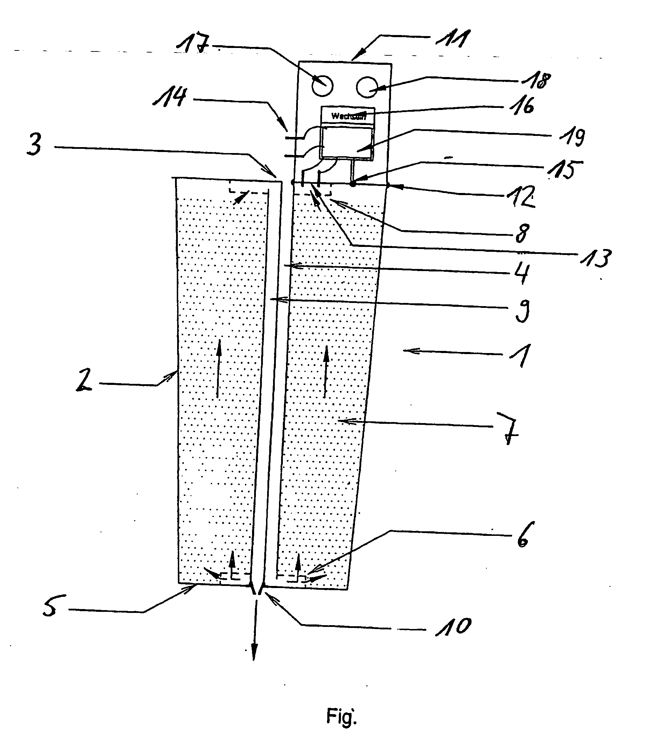

Ein Ausführungsbeispiel der Erfindung ist in der Zeichnung dargestellt und wird nachfolgend anhand der Figur näher erläutert.

Die einzige Figur zeigt schematisch den Aufbau einer möglichen Ausführungsform der Erfindung.

Die einzige Figur zeigt eine Filterpatrone 1 mit einem Gehäuse 2. Über den Wassereintritt 3 und eine abwärtsführende Zuleitung gelangt zu reinigendes Wasser, d.h. Rohwasser nach unten in den Bereich des Bodens 5 des Gehäuses 2. Dort gelangt es über ein Sieb 6 in das Filtergranulat 7 und durchströmt dieses im Aufstrom. Durch ein oberes Sieb 8 kann das Reinwasser aus dem Filtergranulat 7 austreten und gelangt in die ebenfalls abwärtsführende Abflussleitung 9. Durch die Abflussleitung 9 strömt das gereinigte Wasser zum Wasseraustritt 10.

Eine Sensoreinheit 11 ist in einer umlaufenden Ringnut 12 mit dem Gehäuse 2 der Filterpatrone 1 verrastet. Zwei Elektroden 13 durchdringen dabei das Gehäuse 2 und ragen nach innen in die Filterpatrone 1. Sie kommen dort in Berührung mit dem gereinigten, durch das Sieb 8 austretende Reinwasser.

Zwei weitere Elektroden 14 sind außen an der Sensoreinheit 11 angebracht und kommen dementsprechend in Kontakt mit dem ungereinigten, vor dem Wassereintritt 3 stehenden Rohwasser.

In thermischen Kontakt mit der Filterpatrone 1 ist weiterhin ein Temperaturfühler 15 vorgesehen.

Die Sensoreinheit 11 ist darüber hinaus mit einem Display 16, einem Taster 17 und einer Batterie 18 versehen. Die zentrale Auswerteelektronik 19 ist in der schematischen Darstellung gemäß der Figur nur angedeutet.

Die Sensoreinheit 11 ist in der Lage , über die Elektroden 13 den Leitwert bzw. die Leitfähigkeit des Reinwassers zu messen. Über die Elektroden 14 kann darüber hinaus die Leitfähigkeit des ungereinigten Rohwassers erfasst werden. Hierdurch ist eine Berücksichtigung der Differenz der beiden Leitwerte bei der Bestimmung des Erschöpfungszustands der Filterpatrone 1 möglich.

Über das Display 16 ist die Übermittlung von Informationen an eine Bedienperson, insbesondere die Anzeige eines erforderlichen Filterwechsels möglich.

Der Taster 17, der beispielhaft für beliebige Eingabeelemente eingezeichnet ist, ermöglicht die zusätzliche Eingabe von Informationen oder die Einstellung der Auswerteelektronik 19.

Es können beispielsweise verschiedene Betriebsmodi eingestellt werden oder aber auch Werte für bestimmte Größen zur Berücksichtigung bei der Auswertung der Sensorergebnisse, z.B. ein Filtertyp oder dergleichen eingegeben werden.

Die Sensoreinheit 11 ist mittels der Elektroden 13, 14 in der Lage, zu erkennen, ob es auf eine neue Filterpatrone montiert, d.h. in der vorliegenden Ausführungsform aufgeklipst wurde. Damit kann ein interner, nicht näher dargestellter Zeitgeber gestartet werden. Damit wiederum ist eine zeitabhängige Filterwechselanzeige möglich, bei der gegebenenfalls die mit dem Temperaturfühler 15 erfasste Wassertemperatur berücksichtigt werden kann.

Weiterhin ist die Sensoreinheit 11 in der Lage, den Erschöpfungsgrad der Filterpatrone 1 über Elektroden 13, 14 zu erkennen. Je nach Anwendungsfall kann es bereits ausreichend sein, die Leitfähigkeit des Reinwassers zu erfassen, um anhand von Schwankungen dieses Leitwerts Aussagen über den Erschöpfungsgrad zu treffen. In der vorliegenden Ausführungsform wird zudem über die Elektroden 14 das ungereinigte Rohwasser vor dem Eintritt in die Filterpatrone 1 bezüglich seiner Leitfähigkeit vermessen. Der Unterschied der Leitfähigkeit des gefilterten und des ungefilterten Wassers kann bei der Bestimmung der Erschöpfung der Filterpatrone berücksichtigt werden. Durch die Berücksichtigung dieses Unterschiedes können Fehlereinflüsse unterdrückt werden.

Die Sensoreinheit 11 kann natürlich geometrisch anders ausgeführt werden, z.B. in Form einer Scheibe mit einem Durchbruch für den Wassereintritt 3 und oben liegenden Anzeige und Bedienelementen. Anstelle oder als Ergänzung des Displays 16 kann auch eine andere optische (z.B. LED) oder akustische Signaleinheit vorgesehen werden.

Auch die Filterpatrone kann anderweitig ausgeführt werden. Sie kann z.B. eine untere Wassereintrittsöffnung und nur eine abwärtsführende Abflussleitung, usw. aufweisen.

Wesentlich bei der Erfindung ist der Umstand, dass eine Sensoreinheit vorgesehen ist, die einen Leitwertsensor zur Kontrolle des Zustands der Wasserfilterpatrone umfasst.

### Bezugszeichenliste

- 1: Filterpatrone
- 2: Gehäuse
- 3: Wassereintritt
- 4: Zuleitung
- 5: Boden
- 6: Sieb
- 7: Filtergranulat
- 8: Sieb
- 9: Abflussleitung
- 10: Wasseraustritt
- 11: Sensoreinheit
- 12: Ringnut
- 13: Elektroden
- 14: Elektroden
- 15: Temperaturfühler
- 16: Display
- 17: Taster
- 18: Batterie
- 19: Auswerteelektronik

## Patentansprüche

1. Wasserfilterpatrone, insbesondere zur Trinkwasseraufbereitung in Getränkemaschinen oder Trinkwassergeräten, mit einer austauschbaren Kontrolleinheit zur Kontrolle des Zustands der Wasserfilterpatrone, wobei die Kontrolleinheit eine Sensoreinheit (11) mit wenigstens einem Leitwertsensor (13) umfasst, **dadurch gekennzeichnet, dass** die Kontrolleinheit zur Bestimmung des Erschöpfungsgrades der Filterpatrone mit Hilfe des Leitwertsensors ausgebildet ist, dass Sensorelemente vorgesehen sind, die in das Gehäuse (2) der Filterpatrone (1) hineinragen und dass eine Leitwertmessung entweder im Filterbett oder unmittelbar nach dem Austritt aus dem Filtermaterial der Filterpatrone vorgesehen ist.

2. Wasserfilterpatrone nach Anspruch 1
**dadurch gekennzeichnet, dass** wenigstens ein Durchlass und/oder wenigstens eine Sollbruchstelle für den Durchtritt eine oder mehrerer Sensorelemente (13) vorgesehen sind.

3. Wasserfilterpatrone nach einem der vorgenannten Ansprüche **dadurch gekennzeichnet, dass** ein Leitwertsensor (14) zur Erfassung der Qualität des unfiltrierten Rohwassers vorgesehen ist.

4. Wasserfilterpatrone nach einem der vorgenannten Ansprüche **dadurch gekennzeichnet, dass** eine elektronische Auswerteeinheit (19) vorgesehen ist.

5. Wasserfilterpatrone nach einem der vorgenannten Ansprüche **dadurch gekennzeichnet, dass** eine Berücksichtigung des Unterschieds wenigstens zweier Leitwerte bei der Auswertung der elektronischen Auswerteeinheit (19) vorgesehen ist.

6. Wasserfilterpatrone nach einem der vorgenannten Ansprüche **dadurch gekennzeichnet, dass** die Sensoreinheit 11 einen Temperatursensor (15) umfasst.

7. Wasserfilterpatrone nach einem der vorgenannten Ansprüche **dadurch gekennzeichnet, dass** die Sensoreinheit 11 mit einem Zeitglied zur Zeiterfassung versehen ist.

8. Wasserfilterpatrone nach einem der vorgenannten Ansprüche **dadurch gekennzeichnet, dass** die Sensoreinheit 11 mit einer Anzeige (16) für den Zustand der Wasserfilterpatrone (1) versehen ist.

9. Wasserfilterpatrone nach einem der vorgenannten Ansprüche **dadurch gekennzeichnet, dass** Befestigungselemente (12) zur Befestigung der Sensoreinheit (11) an der Filterpatrone (1) vorgesehen sind.

10. Wasserfilterpatrone nach einem der vorgenannten Ansprüche **dadurch gekennzeichnet, dass** die Befestigungselemente wenigstens teilweise als Rastelemente (12) ausgeführt sind.

11. Getränkemaschine oder Trinkwassergerät mit einer Trinkwasseraufbereitung **dadurch gekennzeichnet, dass** eine Wasserfilterpatrone (1) nach einem der vorgenannten Ansprüche vorgesehen ist.

## Claims

1. Water filter cartridge, in particular for processing drinking water in drinks machines or drinking water devices, with an exchangeable control unit for controlling the status of the water filter cartridge, wherein the control unit comprises a sensor unit (11) with at least one conductance sensor (13), **characterised In that** the control unit is designed to determine the exhaustion level of the filter cartridge by means of the conductance sensor, **in that** sensor elements are provided which project into the housing (2) of the filter cartridge (1) and **in that** a conductance measurement of the filter cartridge Is conducted either in the filter bed or immediately after the exit from the filter material.

2. Water filter cartridge according to claim 1, **characterised in that** at least one opening and/or at least one predetermined breaking point are provided for the passage of one or more sensor elements (13).

3. Water filter cartridge according to any one of the preceding claims **characterised In that** a conductance sensor (14) is provided for determining the quality of the unfiltered untreated water.

4. Water filter cartridge according to any one of the preceding claims, **characterised in that** an electronic evaluation unit (19) is provided.

5. Water filter cartridge according to any one of the preceding claims, **characterised in that** a consideration of the difference between at least two conductance values is provided with the evaluation of the electronic evaluation unit (19).

6. Water filter cartridge according to any one of the preceding claims, **characterised In that** the sensor unit (11) comprises a temperature sensor (15).

7. Water filter cartridge according to any one of the preceding claims, **characterised in that** the sensor unit (11) is provided with a timer for determining the time.

8. Water filter cartridge according to any one of the preceding claims, **characterised in that** the sensor unit (11) Is provided with a display (16) for showing the status of the water filter cartridge (1).

9. Water filter cartridge according to any one of the preceding claims, **characterised in that** fastening elements (12) are provided for securing the sensor unit (11) onto the filter cartridge (1).

10. Water filter cartridge according to any one of the preceding claims, **characterised In that** the fastening elements are designed at least partly as latching elements (12).

11. Drinks machine or drinking water device with drinking water processing, **characterised in that** a water filter cartridge (1) according to one of the preceding claims is provided.

## Revendications

1. Cartouche de filtrage d'eau, en particulier pour le traitement d'eau potable dans des machines à boissons ou des appareils à eau potable, comportant une unité de contrôle interchangeable pour le contrôle de l'état de la cartouche de filtrage d'eau, l'unité de contrôle comprenant une unité de détection (11) ayant au moins un capteur de conductance (13), **caractérisée en ce que** l'unité de contrôle est conçue pour déterminer le niveau d'usure de la cartouche de filtrage à l'aide du capteur de conductance, **en ce qu'**il est prévu des éléments de détection qui pénètrent dans le boîtier (2) de la cartouche de filtrage (1) et **en ce qu'**une mesure de conductance est prévue dans le lit filtrant ou directement après la sortie du matériau filtrant de la cartouche de filtrage.

2. Cartouche de filtrage d'eau selon la revendication 1, **caractérisée en ce qu'**il est prévu au moins un passage et/ou au moins un point de rupture pour le passage d'un ou plusieurs éléments de détection (13).

3. Cartouche de filtrage d'eau selon l'une des revendications précédentes, **caractérisée en ce qu'**il est prévu un capteur de conductance (14) destiné à détecter la qualité de l'eau non filtrée.

4. Cartouche de filtrage d'eau selon l'une des revendications précédentes, **caractérisée en ce qu'**il est prévu une unité d'analyse électronique (19).

5. Cartouche de filtrage d'eau selon l'une des revendications précédentes, **caractérisée en ce qu'**il est prévu une prise en compte de la différence entre au moins deux valeurs de conductance dans l'analyse de l'unité d'analyse électronique (19).

6. Cartouche de filtrage d'eau selon l'une des revendications précédentes, **caractérisée en ce que** l' unité de détection (11) comprend un capteur thermique (15).

7. Cartouche de filtrage d'eau selon l'une des revendications précédentes, **caractérisée en ce que** l' unité de détection (11) est pourvue d'un organe de temps destiné à compter le temps écoulé.

8. Cartouche de filtrage d'eau selon l'une des revendications précédentes, **caractérisée en ce que** l' unité de détection (11) est pourvue d'un affichage (16) pour l'état de la cartouche de filtrage d'eau (1).

9. Cartouche de filtrage d'eau selon l'une des revendications précédentes, **caractérisée en ce qu'**il est prévu des éléments de fixation (12) destinés à la fixation de l'unité de détection (11) sur la cartouche de filtrage (1).

10. Cartouche de filtrage d'eau selon l'une des revendications précédentes, **caractérisée en ce que** les éléments de fixation sont réalisés au moins en partie sous la forme d'éléments à cran d'arrêt (12).

11. Machine à boissons ou appareil à eau potable comportant un traitement d'eau potable, caractérisé(e) en ce qu'il est prévu une cartouche de filtrage d'eau (1) selon l'une des revendications précédentes.
